Europäisches Patentamt

European Patent Office

Office européen des brevets

(11) Publication number: **0 037 726**
**A1**

(12) **EUROPEAN PATENT APPLICATION**

(21) Application number: **81301464.4**

(22) Date of filing: **03.04.81**

(51) Int. Cl.³: **B 60 N 1/02**
**B 60 N 1/08**

(30) Priority: **03.04.80 GB 8011390**
**10.06.80 GB 8018983**

(43) Date of publication of application:
**14.10.81 Bulletin 81/41**

(84) Designated Contracting States:
**AT BE CH DE FR GB IT LI LU NL SE**

(71) Applicant: **TI COX LIMITED**
**Lenton Boulevard**
**Nottingham NG7 2DD(GB)**

(72) Inventor: **Babbs, Frederick William**
**"Greycourt" 10 Hartington Road**
**Sherwood Nottingham(GB)**

(74) Representative: **Broome, Geoffrey Edward et al,**
**KILBURN & STRODE 30 John Street**
**London, WC1N 2DD(GB)**

(54) **Improvements in or relating to vehicle seat slides.**

(57) The slide assembly comprises a first slide member (20) adapted to be mounted on the floor of a vehicle and a second slide member (23) arranged for sliding movement relative to the first slide member (20) and having attachment means for the seat portion of a vehicle comprising a front attachment, which may be fixed or movable, and a rear attachment which may be fixed or movable whereby the height and/or rake angle of the seat may be adjusted.

Fig.1

1.

## IMPROVEMENTS IN OR RELATING TO
## VEHICLE SEAT SLIDES

This invention relates to a vehicle seat slide assembly and is particularly concerned with a seat slide which provides fore and aft adjustment of a vehicle seat, such as a front seat in a motor car and provides for adjustment of the rake angle of the seat portion relative to the floor of the motor car.

In a further arrangement the invention provides for the adjustment of the height of the vehicle seat in the motor car, as well as the rake angle.

An object of the invention is to provide for complete adjustment of a vehicle seat in one simple unit giving fore and aft adjustment and front and/or rear height adjustment for the seat. The invention is specifically directed to a slide assembly intended to be used in a pair of seat assemblies to support a vehicle seat on the floor of a vehicle.

A subsidiary object of the invention is to provide an arrangement in which a single operating lever may be used to allow the adjustment of the height of the rear of the seat and/or the front of the seat.

Accordingly, the present invention provides a vehicle seat slide assembly comprising a first slide member adapted to be mounted on the floor of a vehicle and a second slide member arranged for sliding movement relative to the first slide member and having attachment means for the seat portion of a vehicle comprising a front attachment, which may be fixed or movable, and a rear attachment which may be fixed or movable whereby the height and/or rake angle of the seat may be adjusted.

2.

In one preferred arrangement the front attachment is fixed in combination with a rear attachment which is movable.

Preferably the movable attachment comprises a bell crank member pivotally mounted on the second slide member and provided with a pivotal link attached to the outer end of one arm of the bell crank member, the pivotal link being arranged for attachment to the seat, so that angular movement of the bell crank member on the second slide member causes adjustment of the height of the associated part of the seat.

Preferably means is provided to lock the bell crank member in a selected one of a number of possible positions corresponding to various height adjustments of the associated part of the seat.

Preferably that means for locking the bell crank member comprises one or more pins on said arm of the bell crank member and a toothed arcuate locking member arranged so that selected ones of the teeth of the arcuate member may receive and retain the pin or pins of the bell crank member to lock it against angular movement, means being provided to achieve relative movement between the locking member and the arcuate member to allow disengagement of the pin or pins from the teeth of the arcuate member during adjustment of the height of the seat.

Preferably resilient bias means is provided to urge the pin or pins into engagement with the locking member.

Preferably the means for achieving relative movement between the bell crank member and the locking member comprises a cam device which is rotatable by means of an operating handle.

In a further preferred arrangement of the attachment means, particularly for the front attachment means, a pin is attached to the seat and arranged to slide in a generally vertical slot formed in the second slide member, a toothed comb member being movably mounted in the second slide member so that said pin can be engaged between a selected pair of teeth in the comb member to be retained in a chosen vertical position in said slot.

Preferably said comb member is movable in said second slide member by means of a cam device which is rotatable by means of a handle.

In order to promote a fuller understanding of the above, and other aspects of the present invention, an embodiment will now be described, by way of example only, with reference to the accompanying drawings in which:

Figure 1 shows a perspective view of a first embodiment of the invention,

Figure 2 shows a schematic side view of one slide assembly which may be used in the arrangement of Figure 1,

Figure 3 shows a cross-sectional view of the slide assembly of Figure 2,

Figure 4 shows a schematic side view to a further slide assembly which can be used in the embodiment of Figure 1,

Figure 5 shows a cross-sectional view on the line V-V of Figure 4,

Figure 6 shows a cross-sectional view VI-VI of Figure 4, and

Figure 7 shows a perspective view of a further embodiment of the invention which is similar to that of Figure 1 but which provides for movable adjustment at both front and rear of the seat.

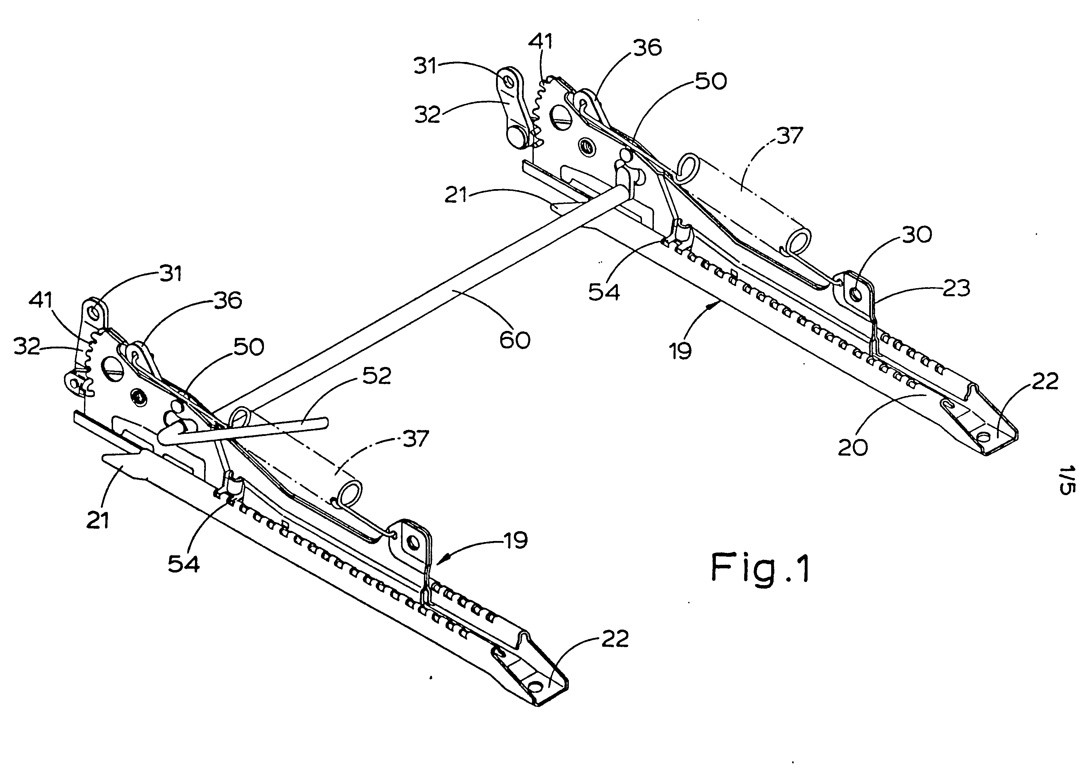

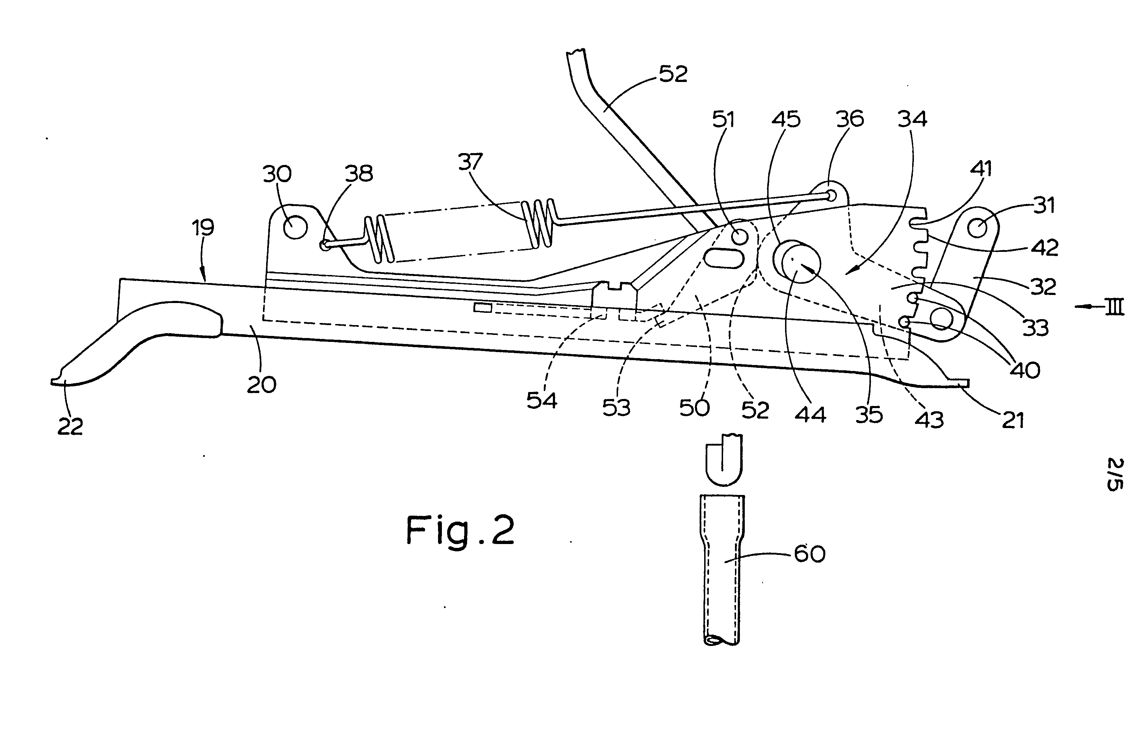

Figures 1 and 2 show in a schematic perspective side view and in elevation a vehicle seat slide arrangement for mounting a seat (not shown) on the floor of a vehicle indicated. A seat slide assembly is shown in Figure 2, and an assembly of a pair of such slide assemblies is shown in Figure 1 as arranged to support a seat.

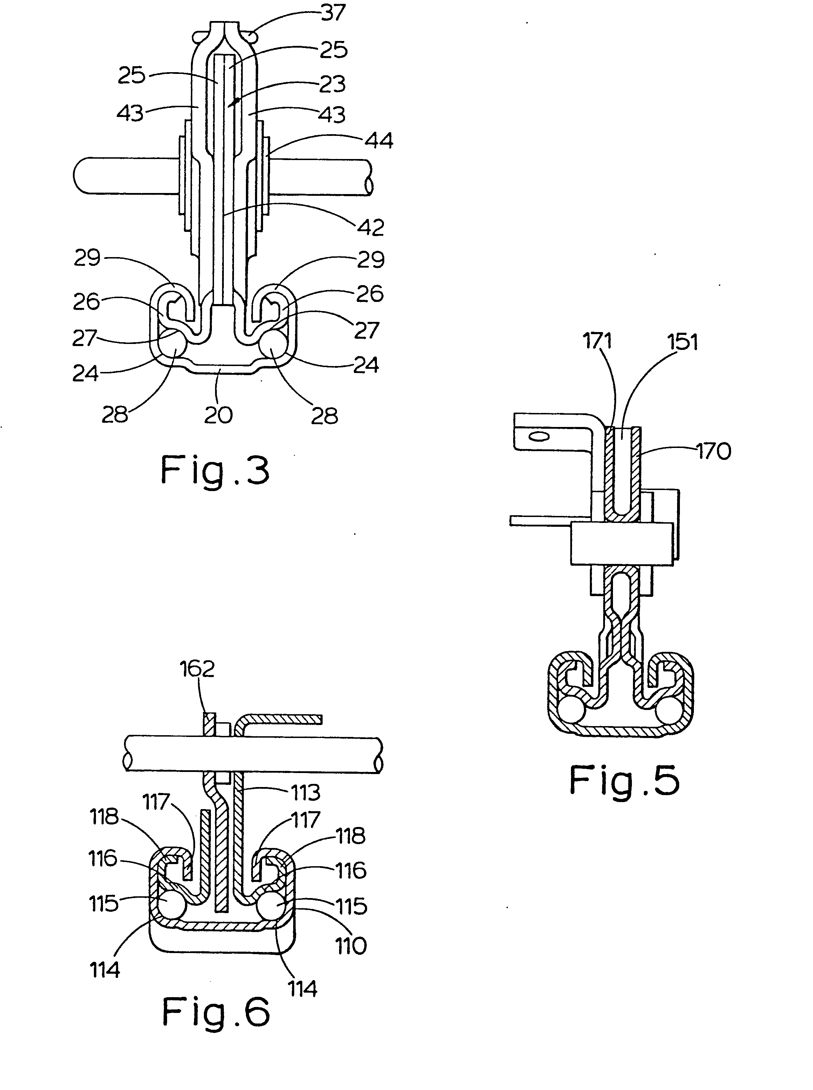

The seat slide 19 comprises a first slide member 20 which is adpated by means of flanges 21 and 22 to be bolted to the floor or other structure of a vehicle, and a movable slide member 23 arranged for fore and aft sliding movement in the slide member 20. As best seen in Figures 2 and 3, the first slide member 20 is formed as a generally channel-shaped member providing ball roller tracks 24 between the bottom and side walls of the member. The second slide member 23 is formed from two sheet metal pressings 25 which are sandwiched together over most of the area as seen in Figure 2 and which are formed with outwardly extending flanges 26 along their bottom edges. The flanges 26 provide roller tracks 27 so that the slide member 23 may be slidably supported in the slide member 20 by means of a series of ball bearings 28. The side walls of the slide member 20 are turned inwards and downwards as indicated at 29 to interlock with the upper edges of the extending portions 26 to resist separation of the slide member 23 from the slide member 20. In a preferred arrangement, the turned in portions 29 of the slide member 20 frictionally engage the portions 26 of the slide member 23 and the ball bearings 28 are thus preloaded slightly to prevent rattling of the seat slide when it is not loaded by an occupant of the seat. When the seat slide is loaded by an occupant, the ball bearings 28 are more loaded and the portions 26 move to clear the portions 29 thus allowing free movement, as a result of resilient deflection of the various components.

As can be seen in Figure 1, the seat portion of a vehicle seat (not shown) may be pivotally mounted on the second seat slide 23 towards the front thereof by means of pivot or bolt holes indicated at 30. The rear of the seat portion is pivotally mounted at 31 to a generally vertical link 32. As seen in Figure 2, the bottom end of the link 32 is pivotally mounted on one arm 33 of a bell crank assembly indicated generally at 34 which is pivotally mounted about an axis 35 on the second seat slide 33. The other arm 36 of the bell crank assembly is connected to a tension spring device 37 which extends forwards from the arm 36 to be attached to the second seat slide 33 at a point indicated at 38. Thus it can be seen that pivotal movement of the bell crank assembly 34 will raise or lower the rear of the seat 10 and thus adjust its rake angle relative to the floor 13, and also adjust its effective height. Further it will be seen that the tension spring device 37 assists in overcoming the weight of the seat and thus assists upward adjustment of it against the weight of the seat structure.

In order to lock the seat 10 in any given position of adjustment, one or more locking pins 40 are provided on the arm 33 of the bell crank assembly 34 and arranged to engage in selected ones of a series of notches 41 formed in an arcuate rear edge 42 of the second seat slide member 33. In order to allow the pins 40 to be disengaged from and engaged with the notches 41, the pivot axis 35 of the bell crank assembly 34 is movable in a fore and aft direction relative to the second seat slide 23.

In the embodiment shown in Figures 2 and 3, the bell crank assembly 34 comprises two similar bell crank members 43 which are arranged one on either side of the second seat slide member 23 and pivotally mounted thereon by means of a pin 44. The bell crank members 43 are retained on the pin 44 by means of shoulders and intervening washers, and receive the pin 44 with elongated holes or slots 45 which allow the above mentioned fore and aft movement. However in an alternative arrangement as shown in Figure 1, the bell crank assembly 34 may be a single member pivotally mounted between the two pressings 25 which form the slide member 23.

An operating cam member 50 is pivotally mounted on the second seat slide member 23 about an axis 51 to be pivotally movable by means of a handle 52. The operating cam member 50 has a rear face 53 which engages the forward edge of one of the bell crank members 43 as seen in Figure 2, so that anticlockwise movement of the handle 52 and thus the operating member 50 pushes the bell crank assembly 34 in a rearward direction to disengage the pins 40 from the respective slots 41, thus to allow angular adjustment and height adjustment of the seat. It can be seen that on release of the handle 52, the weight of the seat and the action of the spring device 37 will bias the bell crank assembly 34 in a forward direction thus to bias the pins 40 into engagement with selected slots 41 after adjustment of the seat.

In the embodiment of Figure 2, the operating member 50 also has an arm 53 extending downwardly and forwardly to engage a catch member 54 which is arranged in known manner per se to releasably engage in slots formed in the two slide members to lock them in a fore and aft direction. Clockwise movement of the handle 52 and thus the operating member 50, causes the arm 53 to lift the catch member 54 thus allowing fore and aft adjustment of the second seat slide member 23 in the first seat slide member 20 in known manner per se.

The operating member 50 is resiliently biassed to a neutral position shown in Figure 2, and movement of it in either direction from that neutral position by means of the handle 52 will operate the respective function discussed above. It can be seen that only one fuction, that is to say fore and aft adjustment or seat angle and height adjustment, may be performed at any one time since the other function will remain locked when one function is unlocked. Thus the arrangement provides a combined slide and height adjustment with a single control lever which is convenient to use.

The pin 44 which may be solidly attached to the seat slide 23 can be formed as a screw-threaded sleeve arranged to receive an M-12 International Standard bolt as a seat belt anchorage. It can be seen that such a seat belt anchorage will slide fore and aft with the seat thus offering greater benefit and comfort to a user of the seat.

In an assembled pair of slide assemblies the operating members 50 of the two slides are connected together by means of a transverse member such as a tubular member indicated schematically at 60 in Figure 1 so that a single handle 52 may be used to operate the operating members 50 in synchronism.

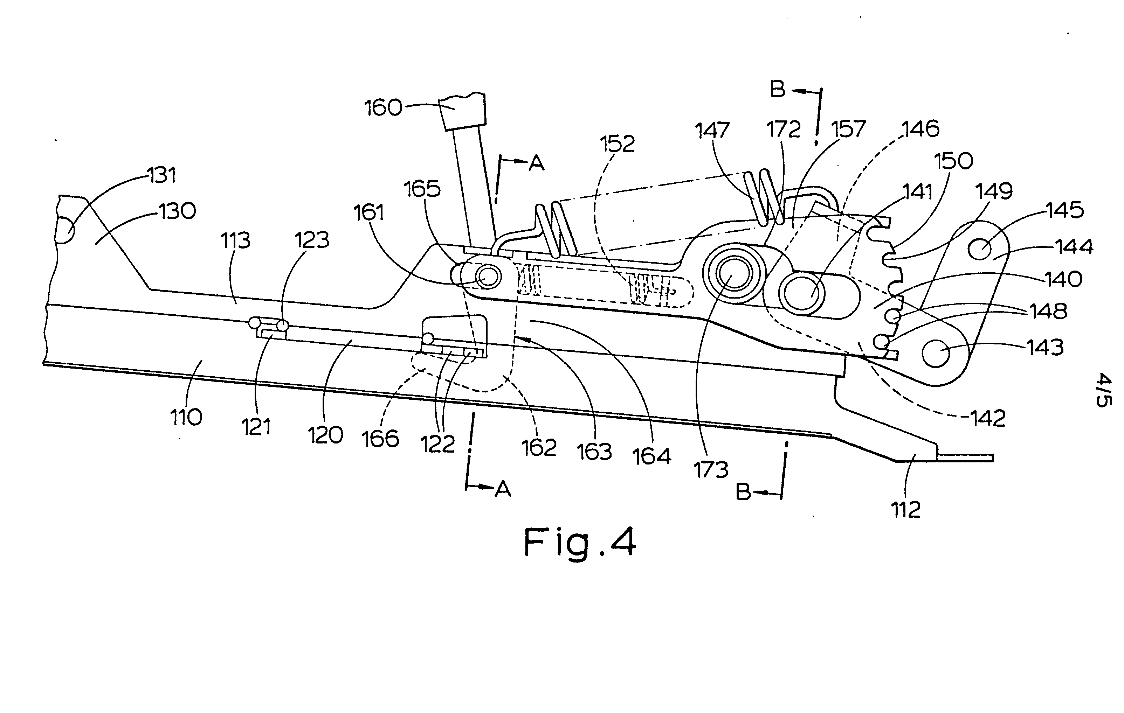

Figures 4, 5 and 6 show a further seat slide assembly which may be used in the arrangement of Figure 1.

The seat slide comprises a first slide member 110 which is provided with flanged brackets 111 and 112 by which it may be bolted to the floor structure of a vehicle. A second slide member 113 is slidably mounted in the slide member 110 for fore and aft adjustment of the position of the vehicle seat.

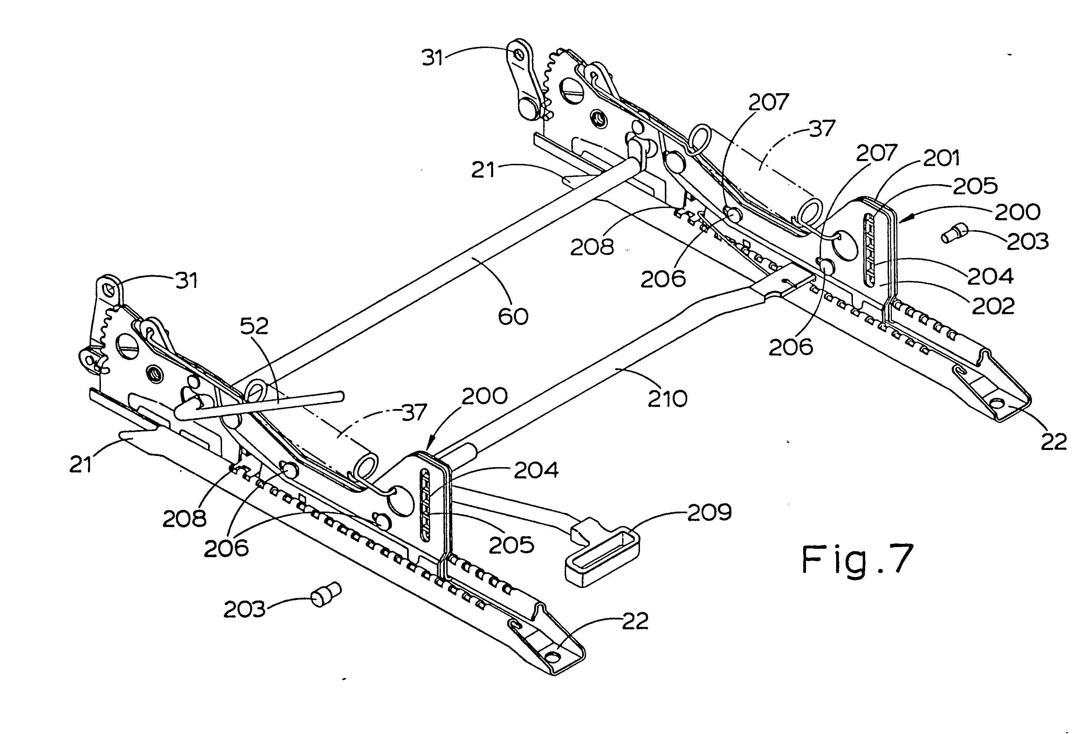

Figures 5 and 6 show the cross-section of the slide members 110 and 113 at various points, and it will be seen that slide member 110 is formed to provide two ball roller tracks 114 along which balls 115 may roll. , The slide 113 is provided with corresponding roller tracks 116 so that the slide 113, and any weight of the seat and an occupant of the seat may be supported on the balls 115 and thus freely slide in the slide member 110. The slide member 110 is provided with inturned ears 117 which co-operate with upwardly turned ears 118 on the slide member 113 to resist separating forces between the slide members so that a seat belt anchorage may be attached to the slide member 113 and any shock loads in the seat belt resisted. The arrangement of the slides 110 and 113 is preferably such that with the slides assembled, the balls 115 are very slightly preloaded in a free state so that an unloaded seat does not rattle in use. When the weight of a person is on the seat, the balls 115 are further loaded, so that the frictional engagement between the ears 117 and 118 is reduced so that the seat may slide freely.

The slide members 110 and 113 are provided in known manner per se with a locking catch 120 which is pivotal about a point 121 and which has outwardly extending ears 122 which engage in slots formed in the slide members 110 and 113 in known manner per se to lock the slide 113 against fore and aft movement in a chosen one of a number of possible positons. The catch member 120 is resiliently biassed into an engaged position by means of a spring indicated at 123.

The seat slide 113 is provided with an upstanding portion 130 with a bolt hole 131 by which the front of a seat structure may be attached to the slide.

Towards the rear of the seat slide, a bell crank member 140 is pivotally mounted by means of a pin 141 in the slide member 113. A first arm 142 of the bell crank member 140 is pivotally connected at 143 to a link 144 having a bolt hole 145 by which it may be attached to the rear part of a seat structure. Thus pivotal movement of the bell crank member 140 may cause angular adjustment of the seat structure relative to the floor of a vehicle, and some measure of height adjustment. The second arm 146 of the bell crank member 140 is connected to a coil spring 147 the other end of which is attached to the seat slide 113 so that the bell crank member 140 is resiliently biassed in an upward direction.

The bell crank member 140 is provided with two pins 148 which are arranged to engage selectively in slots 149 in an arcuate edge 150 of a catch member 151. The catch member 151 is slidably mounted in the seat slide 113 so that it may move from an engaged position as shown in Figure 4 in which the pins 148 are retained in slots 149 thus to lock the bell crank member 140, and a disengaged position forward of the position shown in which the bell crank member 140 is thus free to pivot. The catch member 151 is biassed into the rearward or locked position by means of a coil spring 152.

An operating handle 160 which is connected to a transverse pin 161 is provided to operate the catch member 151. The pin 161 passes through a hooked-shaped lever 162 which is carried in the slide member 113. The lever 162 engages at a point 163 with an abutment 164 formed in the slide member 113 so that on forward movement of the handle 160, the assembly of the handle 160, the pin 161 and the lever 162 pivots anti-clockwise as shown in Figure 4 about the point 163 against the bias of the spring 152 to move the catch 151 into a forward or release position. The bias spring 152 may be attached to the catch member 151 by way of the pin 161. The slide member 113 is provided with slots 165 to allow for such movement of the pin 161. Thus it can be seen that operation of the handle 160 in a forward or anti-clockwise direction as seen in Figure 4 can release the bell crank 140 to allow for seat angle adjustment and release of the handle will relock the seat in the newly adjusted position.

Rearward or clockwise movement of the handle 160 will cause the assembly of the handle 160, the pin 161 and the lever 162 to pivot about the pin 161 so that the hooked portion 166 of the lever 162 will engage and lift the catch member 120 to carry the ears clear of the locking notches in the slide members. Thus it can be seen that rearward or clockwise movement of the handle can release the catch 120 for fore and aft adjustment of the seat and release of the handle will again allow the seat to be locked in the newly adjusted position.

As best seen in Figures 5 and 6, the seat slide member 113 is constructed from two sheet metal side frames 170 and 171 and the catch member 151 is preferably arranged to slide between those side frames having a cut out slot 172 to clear the pin 141 and a bolt fixing 173 which passes through the slide member 113 for the attachment of a seat belt anchorage. The lever 162 is also pivoted between the frames 170 and 171.

Figure 6 shows a view similar to that of Figure 1, only where the front attachment points for the seat are also adjustable for height. In this arrangement the rear attachment points may be exactly similar to any of those discussed with reference to the above embodiments. The second slide members indicated at 200 are formed from two generally parallel sheet metal pressings 201 and 202 in a similar manner to that discussed above, and at least at the front end are spaced apart. The front attachment point for the vehicle seat comprises a pin 203 which is attached to the seat itself and arranged to slide vertically in a slot 204 in the second slide member. A toothed comb member 205 is slidably mounted in the second slide member between the pressings 201 and 202 so that it is movable in a fore and aft direction, headed pins 206 attached to the member 205 being arranged to control its movement by acting in slots 207 formed in the second slide member. The comb member 205 has a series of teeth which in the normal position of the member shown in Figure 7, extend across the slot 204 so that the pin 203 may be engaged by the teeth and locked in a chosen vertical position. If the member 205 is moved away from this position to carry the teeth clear of the slot 204, then the pin 203 can move in the slot 204 to allow for adjustment to the height of the front of the seat.

The member 205 is biassed by spring means (not shown) into the normal position to lock the pin 203 in its selected height adjustment. The member 205 may preferably be arranged to engage on the cam device 50 (Figure 2) so that rotation of the handle 52 in the direction opposite to that for releasing the rear attachment means, releases the front attachment means.

With this arrangement, the fore and aft adjustment of the slide members 200 is exactly similar to that of the previous embodiments, except that the locking dogs indicated at 208 are released by means of a handle 209 connected to the dogs 208 by a cross tube 210.

It should be appreciated that an attachment means similar to that described for the rear attachment means may, as an alternative, be used at the front of the seat if desired.

14.

CLAIMS

1.    A vehicle seat slide assembly comprising a first slide member adapted to be mounted on the floor of a vehicle and a second slide member arranged for sliding movement relative to the first slide member and having attachment means for the seat portion of a vehicle including a front attachment and a rear attachment; in which at least one of said front or rear attachments is arranged for the adjustment of height of the respective part of the seat relative to the first slide member.

2.    A vehicle seat slide assembly as claimed in Claim 1 in which both said front and rear attachments are arranged for the adjustment of the height of the respective part of the seat relative to the first slide member.

3.    A seat slide assembly as claimed in Claim 1 or 2; in which at least the rear attachment comprises a bell crank member (39, 140) pivotally mounted on the second slide member and a pivotal link (32, 144) arranged to be operative between the outer end of one arm of the bell crank member and the rear part of a seat, so that angular movement of the bell crank member on the second slide member causes adjustment of the rear of the seat relative to the first slide member; and in which means (49, 149) is provided to lock the bell crank member in a
selected one of a number of possible angular positions.

4.     A seat slide assembly as claimed in
Claim 3, in which said locking means comprises one or
more pins (40, 148) extending from said one arm of
the bell crank member and a locking member having a
toothed arcuate edge arranged to engage said pin or
pins to lock the bell crank member, means being
provided for achieving relative movement between
the locking member and the bell crank member to
release the bell crank member for angular movement.

5.     A seat slide assembly as claimed in
Claim 4, in which said locking member is fixed
relative to the second slide member and the pivot point
of the bell crank member is movable relative to the
second slide member to achieve said relative movement.

6.     A seat slide assembly as claimed in
Claim 5, in which a cam device (5) with an associated
operating handle (52), is rotatably mounted on the
second slide member in engagement with said bell
crank member so that movement of the handle effects
said relative movement.

7.    A seat slide assembly as claimed in Claim 4, in which said locking member is slidable relative to the second slide member and the pivot point of the bell crank member is fixed relative to the second slide member to achieve said relative movement.

8.    A seat slide assembly as claimed in Claim 7, in which an operating lever (162) with an associated handle (16) is pivotally mounted on the second slide member (113) and arranged to co-operate with said locking member so that movement of the handle effects said relative movement.

9.    A seat slide assembly as claimed in Claim 4, 5, 6, 7 or 8, in which said locking member and said bell crank member are resiliently biassed together.

10.    A seat slide assembly as claimed in any preceding Claim in which at least the front attachment means comprises a pin (203) attached to the front of the seat, and movable in a slot formed in the second slide member, and a toothed comb member (205) movably mounted in the second slide member to releasably engage the pin to lock it in a selected one of a number of vertical positions in the slot (204).

11.    A seat slide assembly as claimed in any preceding Claim in which said first slide member comprises a general 'U' shaped cross-section member (20) having ball bearing tracks (24) formed at each side of the base of the 'U', and the second slide member (23) comprises a plate-like member having outwardly extending flanges (26) having ball bearing tracks (27) formed thereon, there being ball bearings (28) disposed between respective tracks so that the second slide member may roll on the ball bearings in the first slide member, the arms (29) of the cross-section of the first slide member being folded over the flanges (26) of the second slide member to prevent transverse separation of the slide members.

12.    A seat slide assembly as claimed in Claim 11, in which said ball bearings are preloaded.


                              KILBURN & STRODE
                            Chartered Patent Agents
                            Agents for the applicants

Fig.1

Fig.2

0037726

Fig.3

Fig.5

Fig.6

Fig.4

Fig.7

0037726

European Patent
Office

**EUROPEAN SEARCH REPORT**

Application number

EP 81 30 1464.4

| Category | Citation of document with indication, where appropriate, of relevant passages | Relevant to claim |
|---|---|---|
| | GB - A - 1 403 815 (GEBR. ISRINGHAUSEN) <br> * fig. * <br> -- | 1,2,3 |
| | GB - A - 1 389 189 (BROSE) <br> * fig. 1 * <br> -- | 1,2,3 |
| | GB - A - 2 019 207 (C.R. HAMMERSTEIN) <br> * fig. 1 * <br> -- | 1,2 |
| | GB - A - 2 007 497 (C.R. HAMMERSTEIN) <br> * fig. 1 * <br> -- | 1,2 |
| | DE - B2 - 2 545 763 (C.R. HAMMERSTEIN) <br> * fig. 2 * <br> -- | 11 |
| | DE - A1 - 2 726 519 (P.A. RENTROP, HUB-BERT & WAGNER) <br> * fig. 2 * <br> & GB - A - 1 589 126 <br> -- | 11 |
| | DE - A1 - 2 605 997 (O. RIEHLE) <br> * fig. 2 * <br> -- | 11 |
| A | US - A - 4 067 533 (K. KAZAOKA et al.) <br> ---- | |

## DOCUMENTS CONSIDERED TO BE RELEVANT

**CLASSIFICATION OF THE APPLICATION (Int. Cl.³)**

B 60 N 1/02
B 60 N 1/08

**TECHNICAL FIELDS SEARCHED (Int. Cl.³)**

B 60 N 1/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| Berlin | 23-06-1981 | BECKER |